# EUROPEAN PATENT APPLICATION

(11) **EP 4 563 058 A1**
(43) Date of publication of application: **04.06.2025**
(21) Application number: 22952888.0
(22) Date of filing: 21.12.2022
(51) Int. Cl.: A47L 11/40, A47L 11/30, F16K 31/18

(54) **CLEANING DEVICE AND CLEANING SYSTEM**

(30) Priority: 28.07.2022 CN 202210899757; 28.07.2022 CN 202210901500
(71) Applicant: Beijing Roborock Technology Co., Ltd., Beijing 102206 (CN)
(72) Inventor: LI, Xing, Beijing 102206 (CN); ZHOU, Yongfei, Beijing 102206 (CN); ZHU, Mingyang, Beijing 102206 (CN)
(74) Representative: Cabinet Beau de Loménie
(86) International application number: PCT/CN2022/140602
(87) International publication number: WO 2024/021456

(57) **Abstract**

A cleaning device (20) and a cleaning system. The cleaning device (20) comprises a cleaning base body (21) and a device body (22) which are pivotally connected. The device body (22) comprises a first sensing assembly and a sewage tank (25). The sewage tank (25) is detachably connected to the device body (22). The sewage tank (25) comprises a sewage tank body (251), a first floater and a second floater (2541), the first floater and the second floater (2541) being arranged in the sewage tank body (251).

## Description

### CROSS-REFERENCE TO RELATED APPLICATION

This application claims priorities to Chinese Patent Application Nos. 202210899757.3 and 202210901500.7 filed on July 28, 2022, the disclosures of which are herein incorporated as a part of this application by reference in their entireties.

### TECHNICAL FIELD

The present disclosure relates to the field of cleaning technologies, and in particular, relates to a cleaning device and a cleaning system.

### BACKGROUND ART

With continuous development of technology, cleaning devices, such as floor scrubbers, have been used in a wide range of families. Compared with traditional manual cleaning, the floor scrubbers are more time-saving and labor-saving. Typically, the floor scrubber includes a device body and a cleaning base. The device body is internally provided with a water recycle tank (for example, a wastewater tank), and a cleaning liquid tank (for example, a clean water tank), and a main fan for suction. The cleaning base includes a brushroll for mopping. Generally, two brushrolls are arranged to guarantee the cleaning efficiency. A clean cleaning liquid (for example, water) is sprayed through a built-in water hose onto the fluffy brushrolls, which rotate at a high speed to scrub the floor. When the cleaning device is working, the water level in the wastewater tank continues to rise. Therefore, it is necessary to detect the water level in the wastewater tank to avoid overflow due to full water.

### SUMMARY OF THE INVENTION

In some embodiments of the present disclosure, a cleaning device and a cleaning system are provided.

In an embodiment of the present disclosure, a cleaning device is provided. The cleaning device includes:
a cleaning base configured to be able to move on a surface to be cleaned; and
a device body pivotally connected to the cleaning base, the device body including:
   a first sensing assembly disposed on the device body, and
   a wastewater tank detachably connected to the device body, the wastewater tank including:
   a wastewater tank body for containing wastewater, and
   a first float and a second float, which are disposed in the wastewater tank body.
   In an embodiment of the present disclosure, a washing system is provided. The washing system includes:
      a docking station; and
      the cleaning device described above, the docking station being configured to support the cleaning device.

### BRIEF DESCRIPTION OF THE DRAWINGS

The accompanying drawings here are incorporated in the Description and constitute part of the Description, show embodiments conforming to the present disclosure, and are configured to explain the principles of the present disclosure together with the Description. Obviously, the accompanying drawings in the following description only provide some embodiments of the present disclosure, and those of ordinary skills in the art may still derive other drawings from these accompanying drawings without creative efforts. In the accompanying drawings:
FIG. 1 is a schematic structural diagram of a cleaning device according to some embodiments of the present disclosure;
FIG. 2 is a schematic structural diagram of a wastewater tank according to some embodiments of the present disclosure;
FIG. 3 is a schematic structural diagram of a wastewater tank body according to some embodiments of the present disclosure;
FIG. 4 is a schematic structural diagram of a cover bracket according to some embodiments of the present disclosure;
FIG. 5 is a schematic partial detailed diagram of a cover bracket according to some embodiments of the present disclosure;
FIG. 6 is a schematic structural diagram of a cleaning system according to some embodiments of the present disclosure; and
FIG. 7 is a schematic explosive structural diagram of a docking station according to some embodiments of the present disclosure.

Description of reference numerals:
cleaning system 100, docking station 10, cleaning device 20, cleaning base 21, brushroll 211, device body 22, handle assembly 23, wastewater tank 25, wastewater tank body 251, wastewater pipeline 2511, handle 2512, cover bracket 252, first support frame 2521, second support frame 2522, third support frame 2523, locking member 2524, filter mesh pouch 2525, recess 2526, second through hole 2527, filter aperture 2528, first float cover 2533, second float 2541, second rotating shaft 2542, second float cover 2543, first through hole 2544, fastener 2534, second end 255, filter assembly 2551, and clean water tank 26.

### DETAILED DESCRIPTION

To make the objectives, technical solutions and advantages of the present disclosure clearer, the present disclosure will be further described in detail below with reference to the accompanying drawings. Obviously, the described embodiments are only part but not all of the embodiments of the present disclosure. All other embodiments obtained by those of ordinary skills in the art without creative efforts based on the embodiments in the present disclosure shall fall within the protection scope of the present disclosure.

It should be noted that the terms "include", "contain", or any other variants are intended to cover the nonexclusive inclusion, such that a commodity or an apparatus including a series of elements not only includes those elements, but also includes other inexplicitly listed elements, or also includes the elements inherent to such a commodity or apparatus. Without more restrictions, an element defined by the phrase "including a ..." does not exclude the existence of an additional identical element in the commodity or apparatus including such an element.

Typically, a cleaning device (for example, a floor scrubber) includes a device body and a cleaning base. The device body is internally provided with a water recycle tank (for example, a wastewater tank), a cleaning liquid tank (for example, a clean water tank), and a main fan for suction. The cleaning base includes at least one brushroll for mopping. For example, the number of the brushrolls may be 1, 2 or more. Generally, two brushrolls are arranged to guarantee the cleaning efficiency. A clean cleaning liquid (for example, water) is sprayed onto the fluffy brushrolls by means of a built-in water pipe. The brushrolls rotate at a high speed to mop the floor. At the same time, a negative pressure is formed in a device air duct of the cleaning device by a main fan, such that wastewater after a surface is cleaned is sucked through a suction nozzle of the cleaning device, and is drawn into the wastewater tank, with a wastewater return path used as part of the device air duct of the cleaning device.

After being used, the cleaning device is usually put back into a docking station, where the brushrolls can be cleaned and dried. The brushrolls are dried, for example, by air drying or heat drying.

The optional embodiments of the present disclosure will be described in detail below with reference to the accompanying drawings.

In the related art, when a cleaning device (such as a floor scrubber) is working, the water level in the wastewater tank will continue to rise, and a user is required to frequently check the water level in the wastewater tank to avoid overflow due to full water, leading to poor user experience. In addition, it is not convenient for the existing cleaning devices to determine whether the wastewater tank is accurately assembled in the device body.

To this end, a cleaning device is provided according to an embodiment of the present disclosure. The cleaning device is provided with a first sensing assembly, a first float, and a second float, such that a state that the wastewater is full in the wastewater tank of the cleaning device and a state whether the wastewater tank is assembled in place can be detected in time, and the blockage of the float on a single side can be detected by comparing the signals from the two symmetrical floats. In the embodiment of the present disclosure, the filter mesh pouch extending longitudinally along the wastewater tank is disposed, such that the space occupied by the wastewater tank is reduced during assembling, and during dumping of the wastewater, filtration can be implemented by placing the filter mesh pouch substantially in the horizontal direction, thereby facilitating the filtration of the wastewater in the wastewater tank.

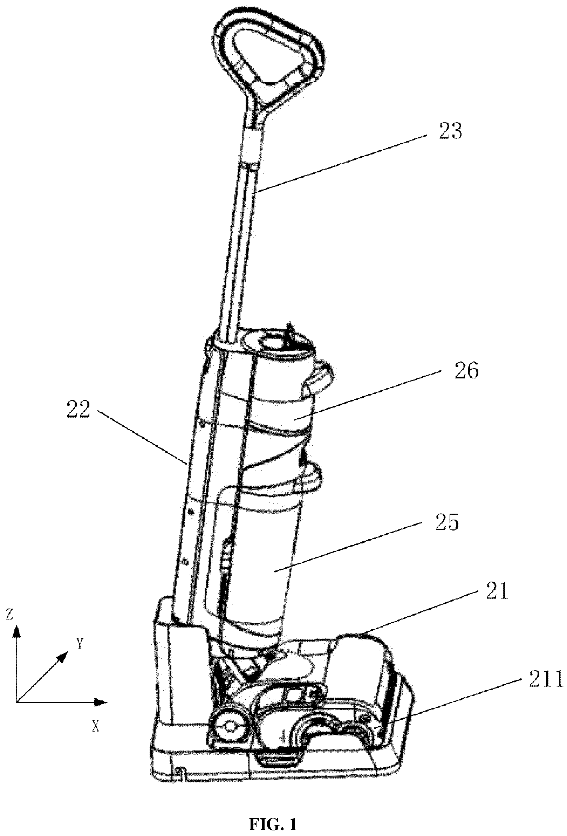

Specifically, as an example of the cleaning device provided by the embodiment of the present disclosure, FIG. 1 is a schematic structural diagram of the cleaning device according to some embodiments of the present disclosure. As shown in FIG. 1, the cleaning device 20, for example, a floor scrubber, includes a cleaning base 21, a device body 22, and a handle assembly 23. The device body 22 is disposed above the cleaning base 21, and is movably (for example, pivotally) connected to the cleaning base 21. The handle assembly 23 is connected to one end of the device body 22 away from the cleaning base 21, for the user to operate and hold. The user holds the handle assembly 23 to control the cleaning base 21 to perform a cleaning task on a surface to be cleaned, for example, on the floor.

For the convenience of description, the directions are defined as follows: the floor scrubber can be calibrated by defining the following three axes perpendicular to one another: a transverse axis Y, a longitudinal axis X and a vertical axis Z. A direction pointed along the arrow of the longitudinal axis X is indicated as "forward", and a direction opposite to the direction along the arrow of the longitudinal axis X is indicated as "backward". The transverse axis Y essentially indicates a direction along the width of the cleaning base 21. A direction along the arrow of the transverse axis Y is marked as "leftward", and a direction opposite to the arrow of the transverse axis Y is marked as "rightward". The vertical axis Z indicates a direction extending perpendicularly from the bottom surface of the cleaning base 21 (i.e., a plane formed by the longitudinal axis X and the transverse axis Y). As shown in FIG. 1, a direction extending from the handle assembly 23 to the device body 22 or extending from the device body 22 to the handle assembly 23 is defined as a first direction, and a direction perpendicular to the first direction is defined as a second direction. In general, when the cleaning device is in a received state, as shown in FIG. 1, the first direction is substantially a vertical direction, which is substantially parallel to the vertical axis Z with a small angle therebetween, for example, an angle of less than 15 degrees. For example, the first direction is vertically upward or downward. The second direction is substantially a horizontal direction, which is substantially parallel to the longitudinal axis X or the transverse axis Y. For example, the second direction is a laterally horizontal direction or a longitudinally horizontal direction.

In some embodiments, the device body 22 refers to the part of the cleaning device disposed between the cleaning base 21 and the handle assembly 23. The device body 22 extends longitudinally as a whole, that is, extending in the first direction. The handle assembly 23 is connected to the upper end of the device body 22. The cleaning base 21 is connected to the lower end of the device body 22. The device body 22 and the cleaning base 21 are pivotally connected, such that the handle assembly 23 and the device body 22 are rotatable relative to the cleaning base 21, thereby changing an operation angle, to flexibly adjust a cleaning posture. The cleaning base 21 includes a brushroll 211 located at the bottom thereof. Specifically, the number of the brushroll 211 is for example 1 or more, for example, 2. The brushroll 211 may rotate at a high speed to scrub the floor.

The cleaning device 20 (for example, a floor scrubber) further includes a clean water tank 26 and a wastewater tank 25. The clean water tank 26 and the wastewater tank 25 are both disposed for example on the device body 22. In some embodiments, the two are detachably connected to the device body 22. The clean water tank 26 is configured to accommodate a cleaning liquid (for example, cleaning water, a cleaning agent or a mixture of the two), and can provide the cleaning liquid through a clean water pipeline to the brushroll 211, such that the surface of the brushroll 211 is wetted, thereby allowing wet cleaning of the surface to be cleaned by the brushroll 211. The wastewater tank 25 is configured to accommodate the recycled wastewater. When the brushroll 211 performs wet cleaning, wastewater is produced on the cleaned surface, and the wastewater can be recycled into the wastewater tank 25 through the wastewater recycle pipeline.

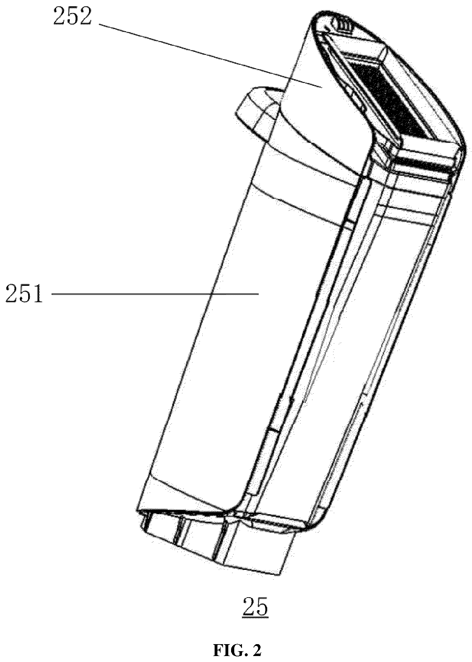

Referring to FIG. 2 to FIG. 5 together, as shown in FIG. 2, the wastewater tank 25 includes a wastewater tank body 251 and a cover bracket 252. The wastewater tank body 251 is configured to accommodate the recycled wastewater, and the wastewater tank body 251 is sleeved on at least the lower half of the cover bracket 252, and is detachably connected to the cover bracket 252. The wastewater tank 251 includes an opening 2513 and a bottom surface 2514.

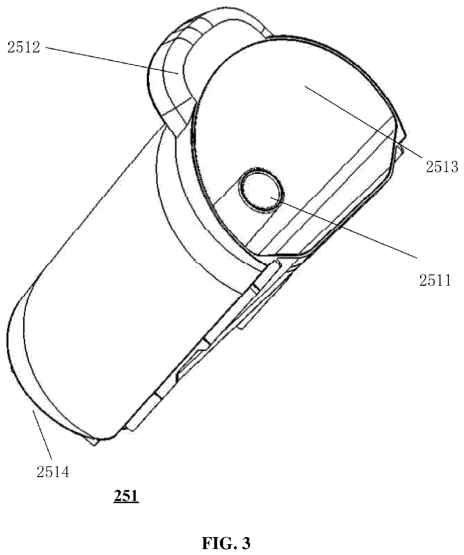

As shown in FIG. 3, the wastewater tank body 251 includes a wastewater pipeline 2511 extending along the bottom surface of the wastewater tank body 251 to the direction of the opening of the wastewater tank body. The wastewater pipeline is configured to allow the wastewater at the brushroll 211 to enter the wastewater tank body 251 from the wastewater pipeline 2511 under the action of the fan. The wastewater tank body 251 further includes a protruding handle 2512 to facilitate the operation during assembling or removal of the wastewater tank 25.

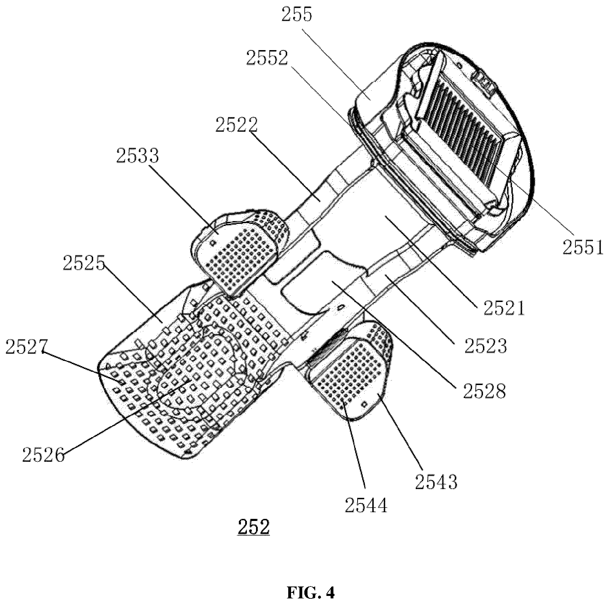

In some embodiments, as shown in FIG. 4, the cover bracket 252 includes: a first support frame 2521, a second support frame 2522 and a third support frame 2523. The first support frame 2521 extends in the longitudinal direction (first direction) of the wastewater tank body 251. The second support frame 2522 extends at a preset angle with the first support frame 2521, for example, extending in a substantially vertical direction (second direction). The third support frame 2523 extends at a preset angle with the first support frame 2521, for example, extending in a substantially vertical direction (second direction). The third support frame 2523 and the second support frame 2522 may be of a symmetrical structure, for example, a symmetrical structure with the first support frame 2521 as the axis in the first direction. In some embodiments, the first support frame 2521, the second support frame 2522 and the third support frame 2523 are integrally formed, and a smooth curved surface or corner may be provided for transition between the first support frame 2521 and the second support frame 2522, and between the first support frame 2521 and the third support frame 2523. The first support frame 2521, the second support frame 2522 and the third support frame 2523 substantially form a U-shaped structure, to improve the stability and strength of the cover bracket 252.

The cover bracket 252 further includes: a first float and a second float. The first float is disposed on one side of the cover bracket 252, the second float is symmetrical to the first float and is disposed on the other side of the cover bracket 252. Specifically, the first float is disposed on the second support frame 2522, the second float is disposed on the third support frame 2523, and the first float and the second float are each rotatable between the first position and the second position.

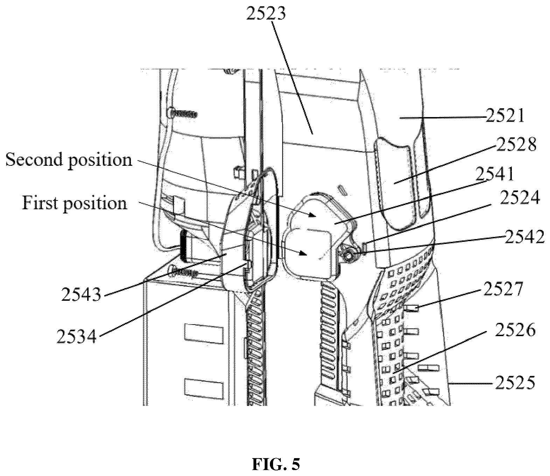

FIG. 5 mainly shows the relationships between the second float 2541 and the related assemblies thereof. It can be understood that the relationships between the first float and the related assemblies thereof are similar, which will not be repeated. Specifically, the first float and the second float 2541 can each move with the change of a water level. The illustration is made below by taking the second float 2541 as an example: when the water level is lower than the second float 2541, the second float 2541 is at the lowest position (i.e., the first position in FIG. 5) because it is not subject to buoyancy. When the water level rises and the water is in contact with the second float 2541, the second float 2541 begins to undergo buoyancy and can thus move with the change of the water level. As the water level continues to rise, due to the limitation of the structure, the second float achieves the highest position (i.e., the second position in FIG. 5) to which it can move. The first float and the second float 2541 work based on the same principle. Specifically, the two floats move in a pivoting manner. In some embodiments, the first float and the second float 2541 adopt small float balls. The small float balls occupy a small space and have a low cost, such that the volume of wastewater that can be accommodated in the wastewater tank can be increased. Furthermore, due to the small volume of the small float ball, the volume of the small float ball immersed in the wastewater will be very small, which has small influence on the volume of wastewater contained in the wastewater tank 25. In combination with the laterally symmetrical structure, the differences in water volumes are relatively small when the small float is triggered in longitudinal or lateral direction. In addition, the small float ball can increase the rotation sensitivity of the float, thereby increasing the detection sensitivity.

In some embodiments, the first float and the second float 2541 are configured to work in cooperation with a first sensing assembly fixed to the device body 22, in order to monitor whether the wastewater tank 25 is assembled in place. Specifically, the first float includes a second sensing assembly, and the second float includes a third sensing assembly. As an embodiment, the first sensing assembly may include one, two or more components. When the first sensing assembly includes two or more components, these components may be disposed at different positions of the device body, in order to produce induction signals by interacting with the second and third sensing assemblies respectively. When the wastewater tank 25 is assembled in the device body 22, the first float and the second float 2541 are at the first position, and the second sensing assembly and/or the third sensing assembly produce(s) an induction signal respectively with the first sensing assembly. The induction signal is configured to provide the information that the wastewater tank 25 assembly is assembled in place. Conversely, when the wastewater tank 25 is not assembled or is not assembled on the device body 22 in a matching manner, the second sensing assembly and/or the third sensing assembly will not produce the induction signal with the first sensing assembly, thereby providing a warning message, to remind the user to reassemble the wastewater tank 25.

In some embodiments, the first sensing assembly is disposed on the corresponding device body in the case that the first float and the second float are at the first position, and the first float and the second float are configured to work in cooperation with the first sensing assembly disposed on the device body 22, to monitor the water level in the wastewater tank body 251. As an embodiment, the first sensing assembly and the first float and/or the second float may produce induction signals of different strengths corresponding to different distances within a certain distance range. For example, the strength of the induction signal decreases with the increase of the distance. For instance, within a distance range of 1-3 cm, the first sensing assembly may produce induction signals with decreasing strengths; with a distance range of less than 1 cm, the strength of the induction signal remains unchanged; and with a distance range of larger than 3 cm, the strength of the induction signal attenuates to 0. Therefore, different distance ranges can be designated as threshold ranges. The above distance ranges may be specific distance values, for example, 1 cm and 3 cm, and different distance ranges may be continuous or discontinuous. A specific example is given below by virtue of a continuous distance range. For example, the range of 1 cm-3 cm is demarcated by 2 cm into two distance ranges, including 1 cm-2 cm and 2 cm-3 cm, which are used as detection threshold ranges respectively for monitoring two cases, i.e., whether the wastewater tank is assembled in place and whether the water is full. When the wastewater tank 25 is assembled in the device body 22, the first float and the second float 2541 are at the first position, the second sensing assembly and/or the third sensing assembly are/is at a first distance (for example, 2.5 cm, which is in the detection threshold range of 2 cm -3 cm) from the first sensing assembly, respectively, and the information that the wastewater tank 25 is assembled in place is provided according to the strength of the induction signal produced by the first sensing assembly. When the wastewater tank 25 is full, the first float and the second float 2541 are at the second position, the second sensing assembly and/or the third sensing assembly are/is at a second distance (for example, 1.5 cm, which is in the detection threshold range of 1 cm -2 cm) from the first sensing assembly, respectively, and the information that the wastewater tank 25 is full is provided according to the strength of the induction signal produced by the first sensing assembly. The procedures for the discontinuous distance range can be done in the same manner.

In some embodiments, the first sensing assembly includes two sets of sensing elements. The first set of sensing elements is disposed on the corresponding device body in the case that the first float and the second float are at the first position, and the second set of sensing elements is disposed on the corresponding device body in the case that the first float and the second float are at the second position. The two sets of sensing elements work in cooperation with the first float and/or the second float respectively, to complete the full-water monitoring task. Specifically, the first float includes a second sensing assembly, and the second float includes a third sensing assembly. When the wastewater tank 25 is assembled in the device body 22, the first float and the second float 2541 are at the first position, and the second sensing assembly and/or the third sensing assembly produce(s) a first induction signal respectively with the first set of sensing elements. The first induction signal is configured to provide the information that the wastewater tank 25 is assembled in place. When the wastewater in the wastewater tank 25 reaches a preset position (for example, the preset position being a full water position allowing the first float and/or the second float to reach the second position), the second sensing assembly and/or the third sensing assembly produce(s) a second induction signal respectively with the second set of sensing elements. The second induction signal is configured to provide the information that the wastewater tank 25 is full, and then prompt the user to deal with it.

In some embodiments, as long as one of the first and second floats provides a second induction signal, the wastewater tank 25 may be determined as full. For example, when one of the floats is blocked or stuck or undergoes other faults preventing it from floating, the other float floats normally, such that the alarm task of full water signal can be fulfilled, thereby avoiding the risk of wastewater overflow.

In some embodiments, the first float includes a second sensing assembly, and the second float includes a third sensing assembly. When the wastewater in the wastewater tank does not reach the preset position, the second sensing assembly and/or the third sensing assembly are/is at the first position, and in response to the wastewater tank assembled in the device body, at least one of the second and third sensing assemblies produces an induction signal with the first sensing assembly. Based on the first induction signal, the information that the wastewater tank is assembled in place is provided. When the wastewater in the wastewater tank reaches the preset position, at least one of the second sensing assembly and/or the third sensing assembly reaches the second position due to the buoyancy of the wastewater, and the distance between the second sensing assembly and/or the third sensing assembly and the first sensing assembly increases, resulting in the disappearance of the induction signal, based on the disappearance of the induction signal, the information that the wastewater tank is full is provided. With such arrangement, the detection function for full water and in-place assembly can be achieved by providing only one detection position (corresponding to the first position), and there is no need to additionally improve a determination circuit of the Hall detection assembly, thereby simplifying the detection logic, improving the detection efficiency, and reducing the cost of the detection circuit.

In some embodiments, the detection of abnormal assembling of the wastewater tank can be achieved by comparing the two symmetrical floats, namely the first float and the second float. Specifically, when the induction signal is produced at only one float, or the difference between the induction signals produced at the first and second floats exceeds a preset threshold, it can be determined that the wastewater tank has abnormal assembly and is not assembled in place, thereby prompting the user to deal with it.

In some embodiments, the detection of single-side float blockage can also be achieved by comparing the two symmetrical floats, namely the first float and the second float. Specifically, when the difference between the induction signals produced at the first and second floats exceeds a preset threshold, it can be determined that the float on one side is blocked, thereby prompting the user to deal with it.

In some embodiments, as an example, the first sensing assembly includes, but is not limited to, a Hall element, such as a Hall plate and a Hall sensing assembly; and the second sensing assembly and the third sensing assembly include, but are not limited to, a magnet.

In some embodiments, the cover bracket 252 further includes a first float cover 2533 and a second float cover 2543. The first float cover 2533 may be pivotally disposed on one side of the cover bracket 252, and the second float cover 2543 may be pivotally disposed on the other side of the cover bracket 252. When the first float cover 2533 and the second float cover 2543 are buckled to the cover bracket 252, the first float cover 2533 covers the first float, and the second float cover 2543 covers the second float 2541. The float covers arranged outside the floats can protect the floats, thereby preventing debris in the wastewater from blocking the floats or affecting the responses of the floats to changes in the water level.

In some embodiments, as shown in FIG. 5, the edge of each of the first float cover 2533 and the second float cover 2543 is provided with at least one fastener 2534, for example, a buckle. The cover bracket 252 is provided with at least one locking member 2524 (for example, a clamping groove) at the corresponding position. By the cooperation of the fastener 2534 with the locking member 2524, the first float cover 2533 and the second float cover 2543 can be buckled with the cover bracket 252, thereby enhancing the protection to the first float and the second float.

In some embodiments, the surface of each of the first float cover 2533 and the second float cover 2543 is provided with a plurality of first through holes 2544. The wastewater in the wastewater tank 25 may flow in or out through the first through hole 2544, such that the first float and the second float may respond quickly to the wastewater level.

In some embodiments, the second float 2541 includes a second rotating shaft 2542, and the second float 2541 may rotate around the second rotating shaft 2542 between the first position and the second position. Similarly, the first float includes a first rotating shaft, and the first float may rotate freely around the first rotating shaft between the first position and the second position.

In some embodiments, the cover bracket 252 further includes a filter mesh pouch 2525, which extends substantially in the same direction as the extension direction of the first support frame 2521. In some embodiments, the filter mesh pouch 2525 and the first support frame 2521 are integrally formed. The integral formation can increase the structural strength and durability of the cover bracket 252 on the whole. The filter mesh pouch 2525 may also be detachably connected to the first support frame 2521 to facilitate its cleaning by a user, and may also be replaced as a consumable. The filter mesh pouch 2525 may also be integrally formed with the first support frame 2521, the second support frame 2522 and the third support frame 2523, thereby further increasing the strength and durability of the cover bracket 252.

The filter mesh pouch 2525 is disposed at the first end of the cover bracket 252 facing the bottom surface of the wastewater tank body 251, and the filter mesh pouch 2525 extends substantially from the bottom surface of the cover bracket 252 to the bottom surface of the wastewater tank body 251. The filter mesh pouch is configured in a way that when the wastewater tank 25 is at the assembly position, the filter mesh pouch 2525 extends substantially in the first direction. When wastewater enters the wastewater tank body 251, it is in the direction substantially the same as the flow direction of the wastewater, such that the resistance when the wastewater enters the wastewater tank body 251 can be reduced, and at the same time, the impurities in the wastewater hung and left in the filter mesh pouch 2525 can be reduced. When the wastewater tank 25 is taken down to dump the wastewater, the user may choose whether to use the filter mesh pouch 2525 to filter the wastewater according to the specific use environment requirement. Specifically, when using the filter mesh pouch 2525 to filter the wastewater, the user may hold the second end 255 of the cover bracket 252, to allow the receiving face of the filter mesh pouch 2525 to face the direction of dumping the wastewater. For example, the filter mesh pouch 2525 may filter the wastewater in the range of a preset angle with the horizontal direction. For example, the preset angle between the extension surface of the filter mesh pouch 2525 and the horizontal direction is in the range of 0-90 degrees. Thus, the filtration operation is facilitated when the user wants to filter the wastewater.

In some embodiments, as shown in FIG. 5, the filter mesh pouch 2525 further includes a recess 2526, which has an opening direction opposite to the extension direction of the second support frame 2522. In the assembly position, the recess 2526 of the filter mesh pouch 2525 faces the outside of the device body 22 for ease of use. Optionally, the filter mesh pouch is made of a hard material, for example, hard plastics, hard organic materials, metals or the like, in order to enhance the rigidity of the filter mesh pouch 2525 during filtration.

In some embodiments, the filter mesh pouch 2525 further includes a plurality of second through holes 2527. In some embodiments, the opening size of the second through hole 2527 is larger than the opening size of the first through hole 2544. The selection of different opening sizes makes it possible to filter different sizes of debris in the wastewater. The second through hole 2527 has a larger opening size, facilitating the rapid filtration and flow of the wastewater, while the first through hole 2544 has a smaller opening size, only allowing water to enter the float covers.

After the wastewater tank 25 is full, the user removes the wastewater tank from the cleaning device body 22, and takes the cover bracket 252 out of the wastewater tank body 251. If the user considers it is necessary to filter the wastewater during dumping, one way is to place the cover bracket 252 horizontally to dispose the filter mesh pouch 2525 below the wastewater outlet of the wastewater tank body 251, such that the wastewater may pass through the recess 2526 of the filter mesh pouch 2525 after flowing out of the wastewater tank body 251, and is then discharged through the second through holes 2527, thereby filtering most of the debris in the wastewater, and preventing a drainage position from blockage caused by large-size debris that are directly dumped to the drainage position (for example, a sewer or a close-stool).

The filter mesh pouch 2525 extends in the same direction as the cover bracket 252 as a whole, and the recess 2526 is shallow with a smooth concave shape and has a certain angle with respect to the containing portion and the filtration portion, such that the user can dump the filtered debris and garbage more conveniently to achieve better use experience. Similarly, the subsequent cleaning process is made easier.

With the filter mesh pouch extending longitudinally along the wastewater tank body, the space occupied in the wastewater tank body during assembling is reduced, and it is not easy to hang and leave debris. During dumping of the wastewater, the filtration function can be selectively used, and the operation is simple and flexible, which improves the practicality of the filter bracket.

In some embodiments, the cover bracket 252 may further include a filter aperture 2528, in which, for example, gauze or other filter materials may be provided. The filter aperture 2528 is disposed on the first support frame 2521 and is configured to filter the air. The air may pass through the first support frame 2521 via the filter aperture 2528, and when the air flows through the filter aperture, particles carried in the air may be blocked by the filter aperture 2528 to achieve coarse filtration of the air. The filter aperture 2528 is disposed on the first support frame 2521. During dumping of the wastewater, the first support frame 2521 needs to be taken out of the wastewater tank body. Here, it is easy for the user to see (i.e., to perceive) the position of the filter aperture 2528 disposed on the first support frame 2521, so as to achieve the effect of reminding the user to clear the dirt attached to the filter aperture 2528 in time can be achieved. Furthermore, the position of the filter aperture 2528 is close to the filter mesh pouch 2525, such that the user may wash the filter aperture 2528 and the filter mesh pouch 2525 together during cleaning. Optionally, the filter aperture 2528 may have a single structure, or a two-lobe structure or other multi-lobe structures, which is not limited.

In some embodiments, the cleaning device 20 further includes a power source, which is configured to generate airflow moving in the same direction in the cleaning device. The airflow brings wastewater (which contains solid waste) from a cleaned surface into the cleaning device 20 for recycle. Therefore, the airflow is defined as recycle airflow. An airflow path through which the recycle airflow flows in the cleaning device 20 is formed by a device air duct. The entire airflow path at least sequentially passes through the wastewater suction nozzle, a dirt collection portion (i.e., a wastewater bucket) and the power source of the cleaning device 20. That is, the device air duct includes at least the wastewater suction nozzle, the dirt collection portion (i.e., the wastewater bucket) and the power source. The recycle airflow from the dirt collection portion does not carry wastewater, and an airflow path from the wastewater suction nozzle to the dirt collection portion is thus defined as the recycle path.

Specifically, the power source may be a suction source, for example a fan, which is disposed in the device body 22 and configured such that air circulates in the device air duct to form the recycle airflow, providing suction power for wastewater recycle. The wastewater recycle pipeline communicates the wastewater suction nozzle and the wastewater tank 25, thereby forming part of the device air duct. Under the action of the suction power generated by the fan, the wastewater is sucked into the wastewater tank 25 through the wastewater recycle pipeline.

In some embodiments, as shown in FIG. 4, the cover bracket 252 further includes a second end 255 opposite to the first end; the second end 255 is close to the opening side of the wastewater tank body 251. The cover bracket 252 further includes a filter assembly 2551 disposed on the second end 255. The filter assembly 2551 is configured to allow the recycle airflow to circulate through the wastewater pipeline 2511, the filter aperture 2528 and the filter assembly 2551. A recycle airflow first passes through the filter aperture 2528 for first filtration, then passes through the filter assembly 2551 for second filtration, and then enters the fan, so as to ensure that the air entering the fan has no impurities and to reduce the damage to the fan. Optionally, the filter assembly 2551 is composed of multi-layer filter cotton and multi-layer gauze. One of the filter aperture 2528 and the filter assembly 2551 may be selectively provided with the gauze. Without doubt, both the filter aperture 2528 and the filter assembly 2551 may also be provided with the gauze to enhance the filtration performance. In some embodiments, the cover bracket further includes an assembly portion 2552 of the wastewater tank body, and the assembly portion is disposed on the second end 255 in a circumferential extension manner, and is configured to be clamped and assembled at the opening of the wastewater tank body 251.

In the cleaning device provided by the embodiment of the present disclosure, two floats are disposed in the wastewater tank, such that a state that the wastewater is full in the wastewater tank of the cleaning device and a state whether the wastewater tank is assembled in place can be detected in time, and the blockage of the float on a single side can be detected by comparing the signals from the two symmetrical floats.

In the embodiment of the present disclosure, the filter mesh pouch extending longitudinally along the wastewater tank is disposed, such that the space occupied by the wastewater tank is reduced during assembling, the impurities are prevented from being hung and left, and during dumping of the wastewater, filtration can be implemented by placing the filter mesh pouch substantially in the horizontal direction, thereby facilitating the filtration of the wastewater in the wastewater tank, and improving the practicability of the filtration support.

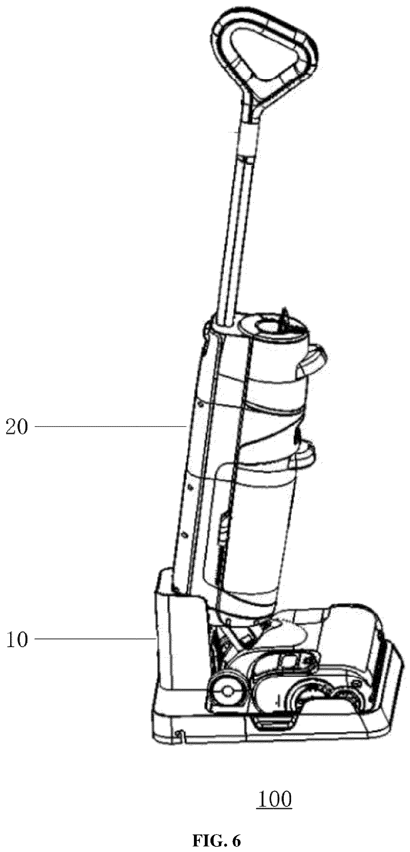

As shown in FIG. 6, a cleaning system 100 is further provided by the present disclosure, and includes: a docking station 10 and the cleaning device 20 in the foregoing embodiments. The docking station 10 is configured to support the cleaning device 20.

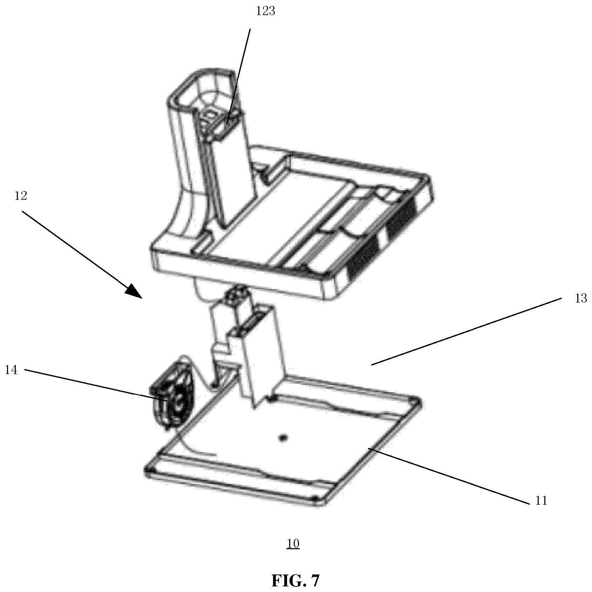

FIG. 7 is a schematic explosive structural diagram of the docking station 10 according to some embodiments of the present disclosure. As shown in FIG. 7, in some embodiments of the present disclosure, a docking station 10 is provided, and is configured to support the cleaning device and dry the cleaning parts of the cleaning device. The cleaning device is, for example, a floor scrubber, and the cleaning parts are, for example, brushrolls of the floor scrubber. The floor scrubber may be put back into the docking station 10 for support after the cleaning work is completed, and various operations (including charging, self-cleaning, drying cycle or the like) may be performed on the docking station.

As shown in FIG. 7, the docking station 10 includes a housing 12, which has an accommodation space 13. For example, the housing 12 includes a bottom plate 11 and an upper shell buckled on the bottom plate 11, and the bottom plate 11 and the upper shell enclose the accommodation space 13. The bottom plate 11 and the upper shell may be detachable assembled parts, or may be integrally formed. The docking station 10 further includes a fan 14 of the docking station. The fan is disposed in the accommodation space 13, and is configured to produce dry air in the accommodation space 13. The housing 12 is provided with an air outlet 123 of the docking station. The air outlet is configured to engage with the air outlet at the bottom of the device body 22 of the cleaning device, for example, the floor scrubber.

The device air duct of the cleaning device is configured to allow the wastewater to flow into the wastewater tank and transport moist air, when the cleaning device performs the cleaning operation. When the cleaning device is put back to the docking station, the air outlet of the docking station may engage with the air outlet of the cleaning device, and under the action of the fan in the docking station, dry air enters the cleaning device from the air outlet of the cleaning device, and reaches the brushroll of the cleaning device along the device air duct of the cleaning device, to dry the brushroll of the cleaning device. Meanwhile, since the device air duct includes the wastewater tank of the cleaning device, the dry air can flow through the wastewater tank of the cleaning device to dry the inner wall of the wastewater tank, thereby avoiding long-term humidity of the wastewater tank and the device air duct and breeding dirt.

In some embodiments, the wastewater tank further includes:
a cover bracket detachably connected to the wastewater tank body, wherein the first float is disposed on one side of the cover bracket, the second float is disposed on the other side of the cover bracket, and the first float and the second float are both movable between a first position and a second position.

In some embodiments, in response to the wastewater tank being assembled in the device body, the first sensing assembly outputs a signal indicating that the wastewater tank is assembled in place, and/or,
in response to a water level in the wastewater tank reaching a preset position, the first sensing assembly outputs a signal indicating that the wastewater tank is full.

In some embodiments, the first float includes a second sensing assembly; and
the second float includes a third sensing assembly,
wherein the second sensing assembly and/or the third sensing assembly produce/produces an induction signal respectively with the first sensing assembly; and
the induction signal corresponding to the signal indicating that the wastewater tank is full is a non-induction signal.

In some embodiments, the cover bracket further includes:
a first float cover covering the first float; and
a second float cover covering the second float.

In some embodiments, the first float cover can be pivotally disposed on one side of the cover bracket; and
the second float cover can be pivotally disposed on the other side of the cover bracket,
wherein in response to the first float cover and the second float cover being buckled to the cover bracket, the first float cover covers the first float, and the second float cover covers the second float.

In some embodiments, the first float cover and the second float cover are each provided with a plurality of through holes.

In some embodiments, the first float includes a first rotating shaft;
the second float includes a second rotating shaft; and
the first float and the second float rotate around the first rotating shaft and the second rotating shaft, respectively, between the first position and the second position.

In some embodiments, the first sensing assembly includes a Hall element, and the second sensing assembly and the third sensing assembly include a magnet.

In some embodiments, the cover bracket includes:
a first support frame extending in a longitudinal length direction of the wastewater tank body;
a second support frame extending in a direction substantially perpendicular to the first support frame; and
a third support frame, extending in the direction substantially perpendicular to the first support frame symmetrically with the second support frame,
wherein the first float is disposed on the second support frame, and the second float is disposed on the third support frame.

In some embodiments, the cover bracket further includes:
a filter mesh pouch extending substantially in an extension direction of the first support frame.

In some embodiments, the filter mesh pouch is integrally formed with the first support frame.

In some embodiments, the filter mesh pouch includes a recess, which has an opening direction opposite to an extension direction of the second support frame.

In some embodiments, the filter mesh pouch includes a plurality of second through holes, an opening of the second through hole is larger than that of the first through hole.

In some embodiments, the cover bracket further includes:
gauze disposed on the first support frame and configured to filter air.

Finally, it should be noted that the embodiments in the Description are described in a progressive manner, each embodiment focuses on a feature that distinguishes it from other embodiments, and cross reference can be made for the same or similar parts between these embodiments. For the system or apparatus disclosed in the embodiments, it is described in a relatively simple manner since the system or apparatus corresponds to the method disclosed in the embodiments, and a reference can be made to the description in the method section for the relevant content.

The above embodiments are only used to illustrate the technical solutions of the present disclosure and are not intended to limit the present disclosure. Although the present disclosure has been described in detail with reference to the foregoing embodiments, those of ordinary skill in the art should understand that they can still make modifications to the technical solutions described in the foregoing embodiments, or make equivalent substitutions to some of the technical features; and these modifications or substitutions do not deviate the nature of the corresponding technical solutions from the spirit and scope of the technical solutions of various embodiments of the present disclosure.

## Claims

1. A cleaning device, comprising:
a cleaning base configured to be able to move on a surface to be cleaned; and
a device body pivotally connected to the cleaning base, the device body comprising:
a first sensing assembly disposed on the device body, and
a wastewater tank detachably connected to the device body, the wastewater tank comprising:
a wastewater tank body configured to contain wastewater, and
a first float and a second float, disposed in the wastewater tank body.

2. The cleaning device according to claim 1, wherein the wastewater tank further comprises:
a cover bracket detachably connected to the wastewater tank body, wherein the first float is disposed on one side of the cover bracket, the second float is disposed on the other side of the cover bracket, and both the first float and the second float are movable between a first position and a second position.

3. The cleaning device according to claim 2, wherein
in response to the wastewater tank being assembled in the device body, the first sensing assembly outputs a signal indicating that the wastewater tank is assembled in place, and/or,
in response to a water level in the wastewater tank reaching a preset position, the first sensing assembly outputs a signal indicating that the wastewater tank is full.

4. The cleaning device according to claim 3, wherein
the first float comprises a second sensing assembly; and
the second float comprises a third sensing assembly,
wherein the second sensing assembly and/or the third sensing assembly produce/produces an induction signal respectively with the first sensing assembly; and
the induction signal corresponding to the signal indicating that the wastewater tank is full is a non-induction signal.

5. The cleaning device according to claim 2, wherein the cover bracket further comprises:
a first float cover covering the first float; and
a second float cover covering the second float.

6. The cleaning device according to claim 5, wherein
the first float cover is pivotally disposed on one side of the cover bracket; and
the second float cover is pivotally disposed on the other side of the cover bracket,
wherein in response to the first float cover and the second float cover being buckled to the cover bracket, the first float cover covers the first float, and the second float cover covers the second float.

7. The cleaning device according to claim 5, wherein the first float cover and the second float cover are provided with a plurality of first through holes respectively.

8. The cleaning device according to claim 2, wherein
the first float comprises a first rotating shaft;
the second float comprises a second rotating shaft; and
the first float and the second float rotate around the first rotating shaft and the second rotating shaft respectively, between the first position and the second position.

9. The cleaning device according to claim 4, wherein the first sensing assembly comprises a Hall element, and the second sensing assembly and the third sensing assembly comprise a magnet.

10. The cleaning device according to claim 7, wherein the cover bracket comprises:
a first support frame extending in a longitudinal length direction of the wastewater tank body;
a second support frame extending in a direction substantially perpendicular to the first support frame; and
a third support frame extending in the direction substantially perpendicular to the first support frame symmetrically with the second support frame,
wherein the first float is disposed on the second support frame, and the second float is disposed on the third support frame.

11. The cleaning device according to claim 10, wherein the cover bracket further comprises:
a filter mesh pouch extending substantially in an extension direction of the first support frame.

12. The cleaning device according to claim 11, wherein the filter mesh pouch is integrally formed with the first support frame.

13. The cleaning device according to claim 11, wherein the filter mesh pouch comprises a recess, the recess has an opening direction opposite to an extension direction of the second support frame.

14. The cleaning device according to claim 11, wherein the filter mesh pouch comprises a plurality of second through holes, an opening of the second through hole is larger than that of the first through hole.

15. The cleaning device according to claim 10, wherein the cover bracket further comprises:
gauze disposed on the first support frame and configured to filter air.

16. A cleaning system, comprising:
a docking station; and
the cleaning device of any one of claims 1 to 15, the docking station being configured to support the cleaning device.
